(19) Europäisches Patentamt

European Patent Office

Office européen des brevets

(11) **EP 2 913 310 A1**

(12) **EUROPEAN PATENT APPLICATION**
published in accordance with Art. 153(4) EPC

(43) Date of publication:
**02.09.2015 Bulletin 2015/36**

(21) Application number: **13849872.0**

(22) Date of filing: **22.10.2013**

(51) Int Cl.:
*C02F 3/20* (2006.01)　　*B01D 65/02* (2006.01)
*B01F 3/04* (2006.01)　　*B01F 5/06* (2006.01)
*C02F 1/44* (2006.01)

(86) International application number:
**PCT/JP2013/078551**

(87) International publication number:
**WO 2014/065268 (01.05.2014 Gazette 2014/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2012 JP 2012235750**
**22.11.2012 JP 2012256145**

(71) Applicant: **Mitsubishi Rayon Co., Ltd.**
**Tokyo 100-8253 (JP)**

(72) Inventors:
• **ZOU Takuei**
**Tokyo 100-8253 (JP)**
• **SASAKAWA Manabu**
**Tokyo 100-8253 (JP)**
• **FURUNO Shinsuke**
**Toyohashi-shi**
**Aichi 440-8601 (JP)**

(74) Representative: **Hoffmann Eitle**
**Patent- und Rechtsanwälte PartmbB**
**Arabellastraße 30**
**81925 München (DE)**

(54) **AERATION DEVICE, OPERATION METHOD THEREFOR, AND WATER TREATMENT APPARATUS**

(57)　The present invention relates to an aeration device provided with: an aeration tube, in the upper part of which multiple aeration holes are formed and which extends in the horizontal direction; and an open-ended tube. One end of the open-ended tube directly or indirectly communicates with an end of the aeration tube and the open end of the open-ended tube opens downward in the vertical direction and satisfies formula (1). The present invention provides: an aeration device, which is capable of uniform aeration, can be placed conveniently, and with which complication of tube placement does not occur easily; an operation method therefor; and a water treatment apparatus provided with the aeration device.

$$(D \times d \times n)/Q \leq 7.5 \text{ --- (1)}$$

(In formula (1), (D) is the internal diameter (mm) of the aeration tube, (d) is the diameter (mm) of the aeration holes, (n) is the number of aeration holes per one aeration tube, and (Q) is the air flow (l/min) of the gas supplied per one aeration tube.)

[Fig. 1]

**Description**

TECHNICAL FIELD

The present invention relates to an aeration device disposed below a membrane module unit, an operation method for the same, and a water treatment apparatus including the aeration device disposed below the membrane module unit.

The invention claims the benefits of Japanese Patent Applications No. 2012-235750, filed on October 25, 2012 and No. 2012-256145, filed on November 22, 2012, in the Japanese Intellectual Property Office, the entire disclosures of which are incorporated herein.

BACKGROUND ART

In a conventional scheme, an aeration device including an aeration pipe in which a plurality of aeration holes are formed is disposed in a water tank of a water treatment apparatus including a membrane module unit (for example, activated sludge treatment equipment, membrane washing equipment, membrane separation device, waste water treatment equipment, and the like) such that the aeration device is positioned below the membrane module unit, gas for aeration such as air is caused to spout out into the water tank to aerate water to be treated, and sludge and the like attached to a membrane module is separated using rising air bubbles of the gas for aeration (the membrane module is washed).

There are known aeration devices such as an aeration device in which an aeration pipe is directly connected to a gas supply pipe connected to a blower and the like, and an aeration device in which a plurality of aeration pipes are connected to a gas supply pipe through a main pipe such as a header pipe as illustrated in, for example, Patent Document 1.

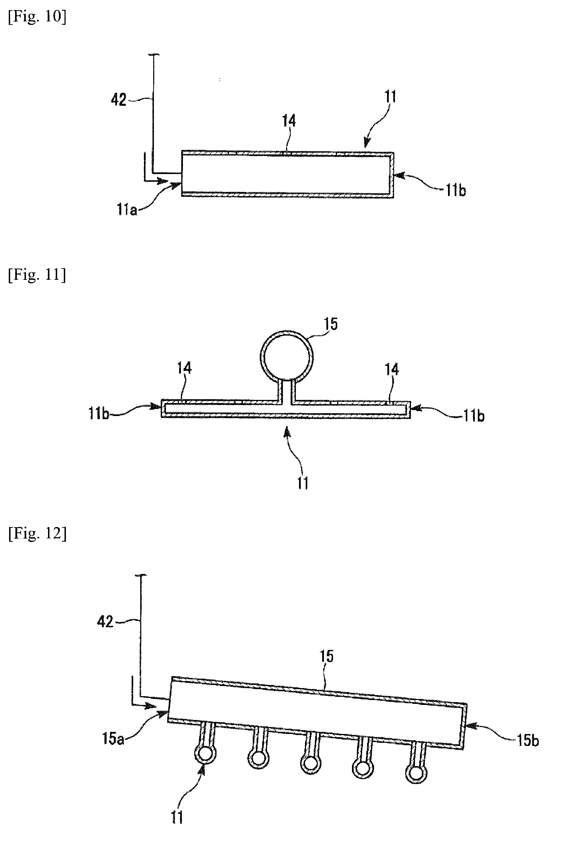

For example, as illustrated in Fig. 10, when an aeration device is disposed in a water tank, an aeration pipe 11 including a blocked distal end 11b is disposed in a horizontal direction such that aeration holes 14 face upward, and a gas supply pipe 42 supplies gas for aeration from a side of a base end 11a of the aeration pipe 11. In addition, for example, as illustrated in Fig. 11, Patent Document 2 proposes an aeration device in which a main pipe 15 is connected to a center of an aeration pipe 11 including both blocked distal ends 11b.

However, in this case, a turbulent flow of the gas for aeration is easily generated near the distal end(s) 11b in the aeration pipe 11, and aeration from the aeration holes 14 on a side of the distal end(s) 11b is not uniformly performed. As a result, there is a problem in that the membrane module is not sufficiently washed due to non-uniform aeration, and a function of the membrane module is degraded due to attached sludge and the like (clocking).

Moreover, the aeration device is generally operated under the condition of high air quantity. However, there is a problem in that running cost, equipment cost, and the like due to increase in electricity consumption soar as an air flow of aeration increases.

Here, in the invention, a "base end" refers to one end on a side supplied with gas for aeration, and a "distal end" refers to the other end facing the base end. In the invention, the "base end" may simply be referred to as "one end", and the "distal end" may simply be simply referred to as "the other end".

In this regard, in order to uniformly perform aeration, for example, as illustrated in Fig. 12, Patent Document 3 proposes an aeration device in which a main pipe 15 is disposed at a certain angle such that a base end 15a is higher than a distal end 15b in the main pipe 15.

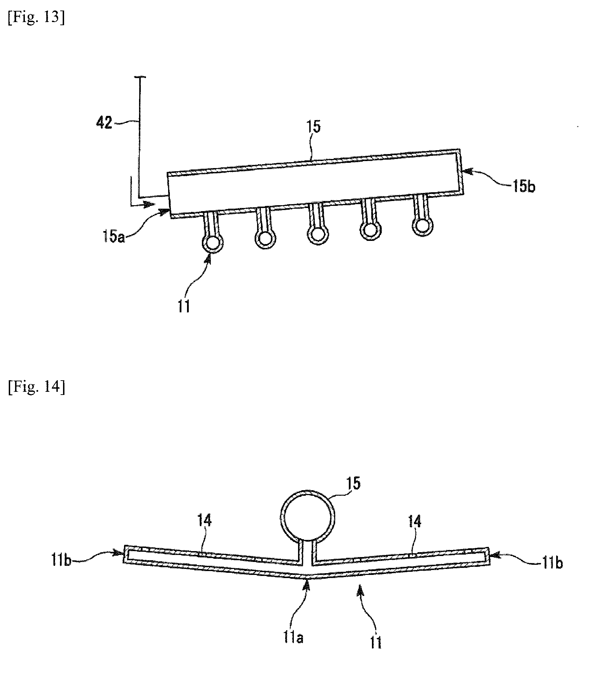

In addition, for example, Patent Document 4 proposes an aeration device in which a main pipe 15 is disposed at a certain angle such that a distal end 15b is higher than a base end 15a in the main pipe 15 as illustrated in Fig. 13, and an aeration device in which a main pipe 15 is connected to a center of an aeration pipe 11 disposed at a certain angle such that distal ends 11b are higher than a base end 11 a in the aeration pipe 11 as illustrated in Fig. 14.

CITATION LIST

PATENT DOCUMENT

Patent Document 1: JP Hei 11-244674 A

Patent Document 2: JP 2010-119976 A

Patent Document 3: JP 2003-144876 A

Patent Document 4: US 2009/0,051,057 A

SUMMARY OF THE INVENTION

PROBLEM TO BE SOLVED BY THE INVENTION

However, as illustrated in Figs. 12 to 14, it is difficult to dispose the main pipe or the aeration pipe at a certain angle. Moreover, an installing position is usually determined by being calculated from experience, and there is a lack of versatility. In addition, the pipes tend to be easily complicated.

The invention has been conceived in view of the above circumstances, and an object of the invention is to provide an aeration device which may uniformly perform aeration, is conveniently installed, and has a pipe that is rarely complicated, an operation method for the same, and a water treatment apparatus including the aeration device.

MEANS FOR SOLVING PROBLEM

The invention has embodiments below.

[1] An aeration device including an aeration pipe having a plurality of aeration holes formed in an upper portion and extending in a horizontal direction, and an opening pipe which has one end directly or indirectly communicating with a distal end of the aeration pipe and the other end opening downward in a vertical direction and extends in the vertical direction, wherein Inequality (1) below is satisfied:

$$(D \times d \times n)/Q \leq 8$$

(In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

[2] The aeration device according to [1], including a main pipe supplied with gas from outside, a plurality of the aeration pipes having a base end that communicates with the main pipe, and the opening pipe.

[3] The aeration device according to [2], including the main pipe, the plurality of aeration pipes, and a plurality of opening pipes having one ends that directly communicate with distal ends of the respective aeration pipes.

[4] The aeration device according to [2], including the main pipe, the plurality of aeration pipes, communication members allowing distal ends of the aeration pipes to communicate with each other, and the one or plurality of opening pipes having one ends communicating with the communication members.

[5] The aeration device according to [4], wherein a ratio (A/B) of the number A of the aeration pipes to the number B of the opening pipes is within a range of 1 to 3.5.

[6] The aeration device according to any one of [1] to [5], wherein the internal diameter D of the aeration pipe is within a range of 6 to 20 mm, and the diameter d of each of the aeration holes is within a range of 5 to 6 mm.

[7] The aeration device according to any one of [1] to [6], wherein the number of the aeration holes per aeration pipe is within a range of 3 to 5.

[8] The aeration device according to any one of [1] to [7], wherein the plurality of aeration holes are spaced from each other by 50 to 120 mm.

[9] A water treatment apparatus including a water tank, a membrane module unit disposed in the water tank, and the aeration device according to any one of [1] to [8] disposed below the membrane module unit.

[10] An operation method for an aeration device including an aeration pipe having a plurality of aeration holes formed in an upper portion and extending in a horizontal direction, and an opening pipe extending in a vertical direction and having one end directly or indirectly communicating with a distal end of the aeration pipe and the other end opening downward in the vertical direction, wherein an air flow of gas supplied per aeration pipe is adjusted to satisfy Inequality (1) below:

$$(D \times d \times n)/Q \leq 8 \cdots (1)$$

(In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

In addition, the present invention has aspects below.

<1> An aeration device including a main pipe supplied with gas from outside, a plurality of aeration pipes extending in a horizontal direction and including a base end communicating with the main pipe and aeration holes formed in an upper portion, communication members allowing distal ends of the aeration pipes to communicate with each other, and one or a plurality of opening pipes having one ends communicating with the distal ends of the aeration pipes through the communication members.

<2> The aeration device according to <1>, wherein the other ends of the opening pipes are open downward in the vertical direction and extend in the vertical direction.

<3> The aeration device according to <1> or <2>, wherein a ratio (A/B) of the number A of the aeration pipes to the number B of the opening pipes is within a range of 1 to 3.5.

<4> The aeration device according to any one of <1> to <3>, wherein the internal diameter D of each of the aeration pipes is within a range of 6 to 20 mm, and the diameter d of each of the aeration holes is within a range of 5 to 6 mm.

<5> The aeration device according to any one of <1> to <4>, wherein the number of the aeration holes per aeration pipe is within a range of 3 to 5.

<6> The aeration device according to <5>, wherein the aeration holes are spaced from each other by 50 to 120 mm.

<7> A water treatment apparatus including a water tank, a membrane module unit disposed in the water tank, and the aeration device according to any one of <1> to <6> disposed below the membrane module unit.

The present invention further has the following embodiments.

[1] An aeration device including an aeration pipe having a plurality of aeration holes formed in an upper portion and extending in a horizontal direction, and an opening pipe, wherein one end of the opening pipe directly or indirectly communicates with a distal end of the aeration pipe, an open end of the opening pipe is open downward in a vertical direction, and Inequality (1) below is satisfied:

$$(D \times d \times n)/Q \le 7.5 \cdots (1)$$

(In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

[2] The aeration device according to [1], wherein a sample variance corresponding to an indicator indicating uniformity of aeration satisfies Inequality (2) below:

$$\text{Sample variance} = \{(V_1 - V)^2 + (V_2 - V)^2 + \cdots + (V_n - V)^2\}/n \le 2 \cdots (2)$$

(In Inequality (2), $V_1$, $V_2$, $\cdots$, and $V_n$ denote flow rates of air diffused from n respective aeration holes formed per aeration pipe, and V denotes an average flow rate of air diffused from the respective aeration holes).

[3] The aeration device according to [1] or [2], including a main pipe supplied with gas from outside, a plurality of the aeration pipes, and the opening pipe, wherein base ends of the aeration pipes communicate with the main pipe.

[4] The aeration device according to [3], including the main pipe, the plurality of aeration pipes, and the opening pipe, wherein the one end of the opening pipe directly communicates with distal ends of the respective aeration pipes.

[5] The aeration device according to [3], including the main pipe, the plurality of aeration pipes, communication members allowing distal ends of the aeration pipes to communicate with each other, and one or a plurality of opening pipes having one end communicating with the communication members.

[6] The aeration device according to [5], wherein a ratio (A/B) of the number A of the aeration pipes to the number B of the opening pipes is within a range of 1 to 3.5.

[7] The aeration device according to any one of [1] to [6], wherein a length L of each aeration pipe is within a range of 200 to 500 mm.

[8] The aeration device according to any one of [1] to [7], wherein the internal diameter D of the aeration pipe is within a range of 6 to 20 mm, and the diameter d of each of the aeration holes is within a range of 3 to 10 mm.

[9] The aeration device according to any one of [1] to [8], wherein the number of the aeration holes per aeration pipe is within a range of 3 to 5.

[10] The aeration device according to any one of [1] to [9], wherein the plurality of aeration holes are spaced from each other by 50 to 120 mm.

[11] A water treatment apparatus including a water tank, a membrane module unit disposed in the water tank, and the aeration device according to any one of [1] to [10] disposed below the membrane module unit.

[12] An operation method for an aeration device including an aeration pipe having a plurality of aeration holes formed in an upper portion and extending in a horizontal direction, and an opening pipe having one end directly or indirectly communicating with a distal end of the aeration pipe and an open end opening downward in a vertical direction and extending in the vertical direction, wherein an air flow of gas supplied per aeration pipe is adjusted to satisfy Inequality (1) below:

$$(D \times d \times n)/Q \leq 7.5 \cdots (1)$$

(In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

EFFECT OF THE INVENTION

According to the invention, it is possible to provide an aeration device which may uniformly perform aeration, is conveniently installed, and has a pipe that is rarely complicated, an operation method for the same, and a water treatment apparatus including the aeration device.

BRIEF DESCRIPTION OF DRAWINGS

Fig. 1 is a perspective view illustrating an example of an aeration device according to an embodiment of the invention;
Fig. 2 is a cross-sectional view of the aeration device illustrated in Fig. 1;
Fig. 3 is a perspective view illustrating another example of an aeration device according to another embodiment of the invention;
Fig. 4 is an exploded perspective view in which the aeration device illustrated in Fig. 3 is disassembled into respective members;
Fig. 5 is a perspective view illustrating another example of an aeration device according to another embodiment of the invention;
Fig. 6 is a perspective view illustrating another example of an aeration device according to another embodiment of the invention;
Fig. 7 is a cross-sectional view illustrating another example of an aeration device according to another embodiment of the invention;
Fig. 8 is a schematic diagram illustrating an example of a water treatment apparatus according to an embodiment of the invention;
Fig. 9 is a perspective view illustrating an example of a membrane module unit according to an embodiment of the invention;
Fig. 10 is a cross-sectional view illustrating an example of an aeration device of the related art;
Fig. 11 is a cross-sectional view illustrating another example of an aeration device of the related art;
Fig. 12 is a cross-sectional view illustrating another example of an aeration device of the related art;
Fig. 13 is a cross-sectional view illustrating another example of an aeration device of the related art; and
Fig. 14 is a cross-sectional view illustrating another example of an aeration device of the related art.

MODE(S) FOR CARRYING OUT THE INVENTION

[Aeration device]

Hereinafter, an aeration device of the invention will be described in detail with reference to drawings.

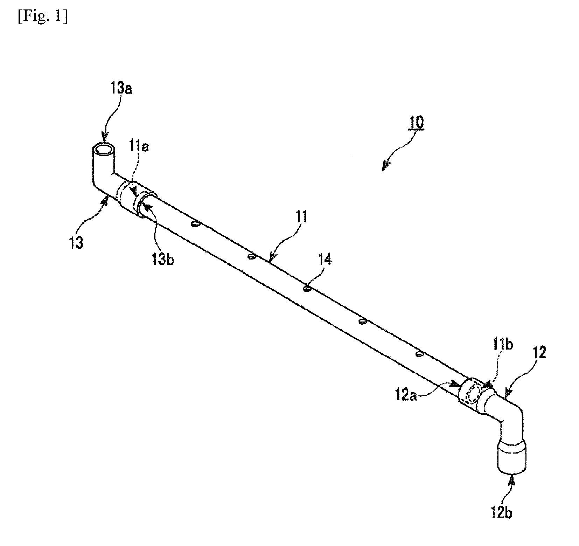

Fig. 1 is a perspective view illustrating an aeration device 10 according to an embodiment of the invention. The aeration device 10 of this example includes an aeration pipe 11 extending in a horizontal direction, an opening pipe 12, and a connecting member 13.

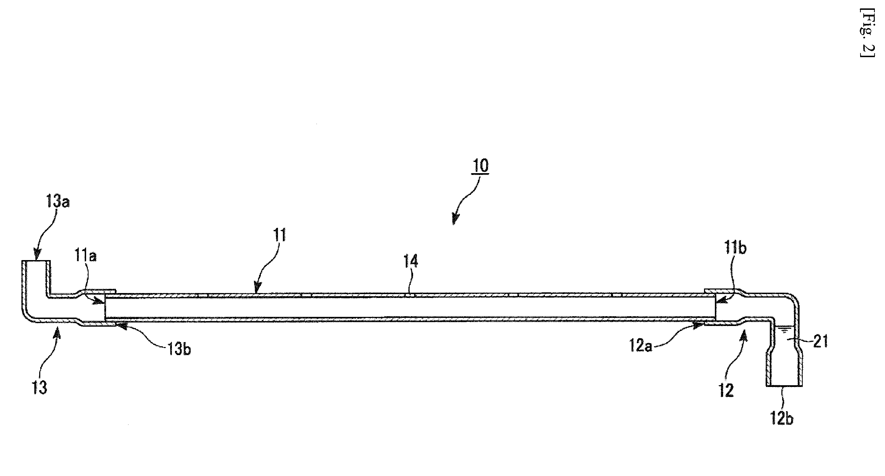

Referring to Figs. 2 to 9 described below, the same reference numeral is applied to the same component as that of Fig. 1, and a description thereof is omitted.

The aeration pipe 11 is configured as a circular pipe in which a cross section perpendicular to a longitudinal direction (hereinafter, referred to as a vertical section) has, for example, a circular shape. A plurality of circular aeration holes 14 allowing gas for aeration (hereinafter, simply referred to as "gas") to spout out are formed in a line along the longitudinal direction of the aeration pipe 11 in an upper portion of a peripheral wall of the aeration pipe 11.

Examples of a material of the aeration pipe 11 include synthetic resins such as polycarbonate, polysulfone, polyethylene, polypropylene, acrylic resin, acrylonitrile-butadiene-styrene (ABS) resin, and polyvinyl chloride, metal.

In the invention, the upper portion of the peripheral wall refers to a peripheral wall of a portion above an axis of the aeration pipe 11 when the aeration pipe 11 is disposed in the horizontal direction. In addition, when centers of the aeration holes 14 are positioned in the upper portion of the peripheral wall of the aeration pipe 11, the aeration holes 14 are regarded to be formed in the upper portion of the aeration pipe 11. In other words, in one embodiment of the aeration device of the invention, it is preferable that the aeration holes 14 be formed in the aeration pipe 11 to face upward in a vertical direction when the aeration pipe 11 is disposed in the horizontal direction.

An internal diameter D of the aeration pipe 11 is preferably 6 to 20 mm, and more preferably 9 to 13 mm. When the internal diameter D of the aeration pipe 11 is within the above range, aeration pressure may be uniformly applied to the aeration holes 14, and gas may be more uniformly diffused. When gas may be more uniformly diffused from the aeration holes 14, a membrane module unit disposed in a region directly above the aeration device 10 more effectively performs water treatment and washing, and thus it is preferable.

Here, the internal diameter D of the aeration pipe 11 refers to a diameter of a portion, through which a liquid or gas actually flows, obtained by subtracting a thickness of the pipe from a diameter of the aeration pipe 11. In addition, the cross section perpendicular to the longitudinal direction of the aeration pipe 11 preferably has a circular shape. Moreover, when the vertical section has an oval shape, the internal diameter D of the aeration pipe 11 refers to a longest line among straight lines drawn to pass through a center of the vertical section of the aeration pipe 11. In addition, it is preferable that the aeration pipe 11 have a shape in which the internal diameter D does not change in the longitudinal direction thereof.

Further, a diameter d of each of the aeration holes 14 is preferably 3 to 10 mm, more preferably 3.5 to 6.5 mm, and even more preferably 4 to 6 mm.

Gas flowing into the aeration pipe 11 spouts out from the aeration holes 14. In this instance, the spouting gas becomes air bubbles, and rises from a bottom to a top. In this way, although described in detail below, the air bubbles rising in the region directly above the aeration device 10 become uniform, and the membrane module unit disposed in the region more effectively performs water treatment and washing. To obtain this effect, the number of the aeration holes 14 formed in the aeration pipe 11 is preferably 3 to 5 per aeration pipe. Although described in detail below, when the aeration device has a plurality of aeration pipes, it is preferable that the aeration pipes have the same number of the aeration holes 14 per aeration pipe. In other words, in one embodiment of the invention, it is preferable that "an aeration pipe in which a plurality of aeration holes are formed" be an aeration pipe in which 3 to 5 aeration holes are formed on a peripheral wall thereof.

Further, a space between the aeration holes 14 is preferably 50 to 120 mm, and more preferably 80 to 100 mm. When the space between the aeration holes 14 is 50 mm or more, the aeration pipe 11 has a moderate length, and thus it is possible to wash an extensive membrane module. However, when the space between the aeration holes 14 widened, air bubbles may rarely reach the membrane module positioned above and between the aeration holes 14, and thus washing may be insufficiently performed. Therefore, the space between the aeration holes 14 is preferably 120 mm or less. Herein, the "space between the aeration holes 14" refers to a distance from a center of one of the aeration holes 14 to a center of another one of the aeration holes 14 adjacent to the one of the aeration holes 14 when the aeration device is seen in the vertical direction in plan view in a state in which the aeration pipe 11 is laid horizontally.

Moreover, in one embodiment of the aeration device of the invention, a length L of the aeration pipe 11 is preferably 200 to 500 mm, and more preferably 250 to 400 mm. Herein, the length of the aeration pipe 11 refers to a distance from a base end of the aeration pipe 11 to a connecting portion of the opening pipe 12. In addition, when the connecting member 13 is connected to the base end of the aeration pipe 11, the length L refers to a distance from a connecting portion between the connecting member 13 and the aeration pipe 11 to the connecting portion of the opening pipe 12. In other words, in Fig. 1, the length L refers to a distance from the other end 13b of the connecting member 13 to one end 12a of the opening pipe 12.

Incidentally, although described in detail below, as a distance from one of the aeration holes 14 formed on a side of a base end 11a of the aeration pipe 11, that is, one of the aeration holes 14 adjacent to the base end 11a to the opening pipe 12 increases, the amount of sludge staying in the aeration device 10, particularly, in the aeration pipe 11 increases due to pressure loss. Thus, the sludge is easily corrupted or solidified in the aeration device 10.

When the number of the aeration holes 14 per aeration pipe is 5 or less, and the space between the aeration holes 14 is 120 mm or less, the distance from the one of the aeration holes 14 adjacent to the base end 11a of the aeration pipe 11 to the opening pipe 12 is not excessively long. Thus, sludge rarely stays. In other words, in one embodiment of the aeration device of the invention, the distance from the one of the aeration holes 14 adjacent to the base end 11a of the aeration pipe 11 to the opening pipe 12 is preferably 20 to 120 mm. When the distance is 20 to 120 mm, sludge rarely stays, and thus it is preferable. In addition, the distance refers to a distance from a center of the one of the aeration holes 14 adjacent to the base end 11a to the other end 12b of the opening pipe 12 when the aeration device is seen in the vertical direction in plan view in the state in which the aeration pipe 11 is laid horizontally.

The opening pipe 12 is a circular pipe in which the one end 12a directly communicates with the distal end 11b of the aeration pipe 11 in a detachable manner, the other end 12b is open downward in the vertical direction, a side of the other end 12b extends downward in the vertical direction, and a cross section perpendicular to the longitudinal direction has a circular shape. Herein, "downward in the vertical direction" includes "diagonally downward". In addition, a length of a portion of the pipe extending downward in the vertical direction corresponding to a length from a tangent line of an upper end of the aeration pipe 11 to the other end 12b of the opening pipe 12 is preferably 2 to 5 times the internal diameter D of the aeration pipe 11. Moreover, when a flow rate of air supplied to the aeration pipe 11 is great, it is preferable to set the length to a relatively long value, for example, 50 to 100 mm.

Examples of the opening pipe 12 include a 90 ° elbow pipe and the like.

Examples of a material of the opening pipe 12 include the synthetic resins, metal and the like given as examples in the above description of the material of the aeration pipe 11.

In addition, an internal diameter of the other end 12b of the opening pipe 12 may be the same as or different from the internal diameter D of the aeration pipe 11.

The connecting member 13 connects the aeration pipe 11 to a gas supply pipe of a gas supply device that supplies gas to the aeration device 10.

The connecting member 13 is a circular pipe in which one end 13a is open upward in the vertical direction, the other end 13b communicates with the aeration pipe 11 in a detachable manner, a side of the one end 13a extends upward in the vertical direction, and a cross section perpendicular to the longitudinal direction has a circular shape. In addition, the one end 13a of the connecting member 13 is detachably connected to the gas supply pipe.

Examples of a material of the connecting member 13 include the synthetic resins, metal and the like given as examples in the above description of the material of the aeration pipe 11.

In one embodiment of the invention, the aeration device 10 satisfies the following Inequality (1).

$$(D \times d \times n)/Q \leq 7.5 \cdots (1)$$

(In Inequality (1), D denotes the internal diameter (mm) of the aeration pipe, d denotes the diameter (mm) of each of the aeration holes, n denotes the number of aeration holes per aeration pipe, and Q denotes an air flow (l/min) of gas supplied per aeration pipe).

In addition, referring to the aeration device 10, a sample variance corresponding to an indicator that indicates uniformity of aeration preferably satisfies the following Inequality (2).

$$\text{Sample variance} = \{(V_1 - V)^2 + (V_2 - V)^2 + \cdots + (V_n - V)^2\}/n \leq 2 \cdots (2)$$

(In Inequality (2), $V_1$, $V_2$, $\cdots$, and $V_n$ denote flow rates of air diffused from n respective aeration holes formed per aeration pipe, and V denotes an average flow rate of air diffused from the respective aeration holes).

The sample variance is a value that may be calculated based on an air flow of gas diffused from the aeration holes 14 and a flow rate of gas diffused from the aeration holes 14. When the sample variance has a value of 2 or less, air is uniformly diffused from the aeration holes 14, and thus it is preferable. The sample variance more preferably has a value of 1.5 or less, and even more preferably has a value of 1 or less.

An air flow of gas supplied to the aeration device 10 is generally equal to a sum of air flows of gas diffused from the respective aeration holes 14 formed in the aeration pipe 11.

Incidentally, a flow rate of gas flowing in the aeration pipe 11 is affected by the internal diameter D of the aeration pipe 11. The flow rate of gas flowing in the aeration pipe 11 tends to decrease as the internal diameter D of the aeration pipe 11 increases, and the flow rate of gas flowing in the aeration pipe 11 tends to increase as the internal diameter D of the aeration pipe 11 decreases. In addition, as the flow rate of gas flowing in the aeration pipe 11 increases, gas more easily reaches up to the distal end 11b of the aeration pipe 11. As a result, uniformity of the air flow of gas diffused from the respective aeration holes 14 is improved. However, if the flow rate of gas flowing in the aeration pipe 11 excessively increases, pressure loss in the aeration pipe 11 increases. As a result, there is concern about increasing aeration energy. When aeration energy increases, energy consumption and running cost soar, and thus it is not preferable.

As a result of a keen examination, the inventors have found that gas may flow in the aeration pipe 11 at a speed at which aeration energy does not increase by adjusting the internal diameter D of the aeration pipe 11, the diameter d of each of the aeration holes 14, the number n of the aeration holes 14 per aeration pipe, and the air flow Q of gas supplied per aeration pipe so as to satisfy the above Inequality (1).

When the aeration device 10 satisfies the above Inequality (1), gas flows up to the distal end 11b of the aeration pipe 11 at a flow rate which is moderately high. Thus, it is possible to uniformly diffuse gas from the respective aeration holes 14 without increasing aeration energy. Therefore, it is possible to sufficiently wash the membrane module, and prevent a function of the membrane module from being degraded due to attached sludge and the like (clocking).

When the air flow Q increases, an air flow flowing out from the respective aeration holes 14 increases, and uniform aeration is easily performed. In this regard, a value of the air flow Q is sufficiently increased such that uniformity of aeration is improved. Thus, a lower limit of $(D \times d \times n)/Q$ is preferably 0.1 or more. In other words, in one embodiment of the invention, the aeration device 10 preferably satisfies $0.1 \leq (D \times d \times n)/Q \leq 7.5$, and more preferably satisfies $1.0 \leq (D \times d \times n)/Q \leq 5.5$.

In addition, the air flow flowing out from the respective aeration holes 14 may be measured by a method of collecting air discharged from the aeration holes using a container such as a measuring cylinder.

<Effects>

The aeration device 10 of the present embodiment includes the aeration pipe 11 extending in the horizontal direction, and the opening pipe 12 having the other end 12b that extends downward in the vertical direction. Here, the one end 12a of the opening pipe 12 communicates with the distal end 11b of the aeration pipe 11, and the other end 12b of the opening pipe 12 is open downward in the vertical direction. For this reason, when the aeration device 11 is immersed in a water tank of a water treatment apparatus, a water pressure is applied upward to the opening pipe 12, in other words, water to be treated 21 is pulled into the opening pipe 12 as illustrated in Fig. 2, and a water surface serves as a cover. As a result, a pressure is uniformly diffused, and gas may be uniformly diffused from the plurality of aeration holes 14 without air bubbles flowing out from the distal end lib of the aeration pipe 11. In particular, the flow rate of gas flowing in the aeration pipe 11 tends to increase as the internal diameter D of the aeration pipe 11 decreases. In addition, gas easily reaches up to the distal end 11b of the aeration pipe 11 when the flow rate of gas flowing in the aeration pipe 11 increases. Thus, it is possible to more uniformly diffuse gas from the plurality of aeration holes 14. Therefore, it is possible to sufficiently wash the membrane module, and prevent a function of the membrane module from being degraded due to attached sludge and the like (clocking).

When the opening pipe 12 does not communicate with the distal end 11b of the aeration pipe 11 (that is, when the distal end 11b of the aeration pipe 11 is not open in the horizontal direction), or when the opening pipe which has the other end open in the horizontal direction and extends in the horizontal direction communicates with the distal end 11b of the aeration pipe 11, gas in the aeration pipe 11 dissipates from the distal end 11b of the aeration pipe 11 and an open end of the opening pipe extending in the horizontal direction, and gas may not be uniformly dispersed.

In addition, the aeration device 10 of the present embodiment satisfies the above Inequality (1), and thus aeration of gas is more uniformly performed.

Moreover, referring to the aeration device 10 of the present embodiment, the aeration pipe 11 extends in the horizontal direction, and thus the aeration pipe needs not to be disposed at a certain angle as illustrated in Figs. 12 to 14. Therefore, the aeration device 10 of the invention is conveniently installed and does not have a complicated pipe.

Incidentally, when an operation of the aeration device immersed in the water tank of the water treatment apparatus is suspended, water to be treated containing impurities such as sludge enters the aeration pipe and the like, and the sludge and the like settle and accumulate in a lower portion of the aeration pipe.

When the operation of the aeration device is resumed, the water to be treated is discharged from the aeration holes. However, for example, when the aeration holes are formed in the upper portion of the aeration pipe as the aeration device illustrated in Figs. 10 to 14 (that is, the aeration holes are formed to face upward), and the distal end of the aeration pipe is blocked, the sludge accumulating in lower portion of the aeration pipe is rarely discharged and continuously stays in the aeration pipe. The staying sludge gradually dries and coarsens due to gas supplied to the aeration pipe. Then, the sludge is separated to move along a flow of gas and block the aeration holes. If the aeration holes are blocked, uniform aeration may not be performed. Therefore, the operation of the aeration device needs to be suspended to clean the aeration pipe and the like.

However, in the aeration device 10 of the present embodiment, the opening pipe 12 having the other end 12b which is open downward in the vertical direction communicates with the distal end 11b of the aeration pipe 11. For this reason, when the operation of the aeration device 10 is resumed, the water to be treated that contains sludge and the like entering the aeration pipe 11 is discharged from the opening pipe 12 by a force that discharges the water to be treated in the aeration pipe 11 or an aeration pressure without blocking the aeration holes 14 formed in the upper portion of the aeration pipe 11. In addition, as illustrated in Fig. 2, the water surface of the water to be treated 21 discharged from the aeration pipe 11 is lower than the aeration pipe 11, and thus it is possible to prevent sludge contained in the water to be treated 21 from being dried and coarsened by gas to block the aeration holes 14.

In the aeration device 10 of this application, the opening pipe 12 has the other end 12b which is open downward in the vertical direction, and the aeration holes 14 are formed in the upper portion of the aeration pipe 11. Therefore, sludge is rarely attached to the aeration holes 14 against gravity, and thus it is possible to obtain the effect of preventing the aeration holes 14 from being blocked. In particular, when a lot of impurities such as coarse sludge having a size of about several mm are contained in the water to be treated, or when it is presumed to be left as it is while aeration is suspended for a long period of time, it is effective to form the aeration holes 14 in the upper portion of the aeration pipe 11.

However, as a distance between the opening pipe 12 and one of the aeration holes 14 adjacent to the base end 11 a of the aeration pipe 11 increases, the amount of sludge staying while the aeration device 10 is suspended increases due to pressure loss. Then, the sludge easily corrupts and solidifies in the aeration device 10. As described above, in order to decrease the amount of sludge staying in the aeration device 10, it is preferable to set the number of the aeration holes 14 to 5 or less per aeration pipe, and set the space between the aeration holes 14 to 120 mm or less.

When the aeration holes are formed in the lower portion of the aeration pipe (that is, the aeration holes are formed to face downward), the water to be treated containing the sludge and the like is discharged from the aeration holes by resuming the operation of the aeration device. However, when a coarse solid material previously stays in the aeration pipe, or the operation is suspended for a long period of time until the sludge and the like corrupts and solidifies, the solid material is not promptly discharged from the aeration holes facing downward, and the aeration holes are blocked.

However, if the aeration holes are formed in the upper portion of the aeration pipe as in the invention, even when the coarse solid material previously stays in the aeration pipe, or the operation is suspended for a long period of time until the sludge and the like corrupts and solidifies, the solid material rarely blocks the aeration holes. Herein, the aeration holes formed to face downward refer to aeration holes formed on a peripheral wall of a portion below the axis of the aeration pipe.

In this way, in the aeration device 10 of the present embodiment, the aeration holes 14 are rarely blocked due to sludge and the like, and thus it is possible to maintain uniform aeration from the aeration holes 14. Further, the aeration pipe 11, the opening pipe 12, and the connecting member 13 are detachably attached to one another, and thus the aeration pipe 11 and the like are easily cleaned, and extremely conveniently maintained.

<Other embodiments>

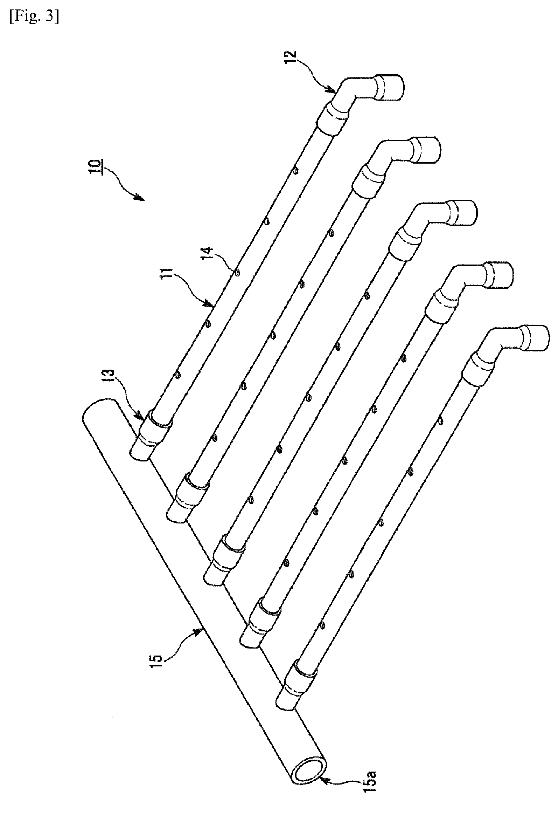

The aeration device of the invention is not limited to the aeration device 10 illustrated in Fig. 1. The aeration device 10 illustrated in Fig. 1 includes the one aeration pipe 11. However, it is possible to provide a plurality of aeration pipes 11. Examples of an aeration device including the plurality of aeration pipes 11 include an aeration device 10 illustrated in Fig. 3 including a main pipe 15 extending in the horizontal direction and supplied with gas from outside, the plurality of aeration pipes 11, and a plurality of opening pipes 12.

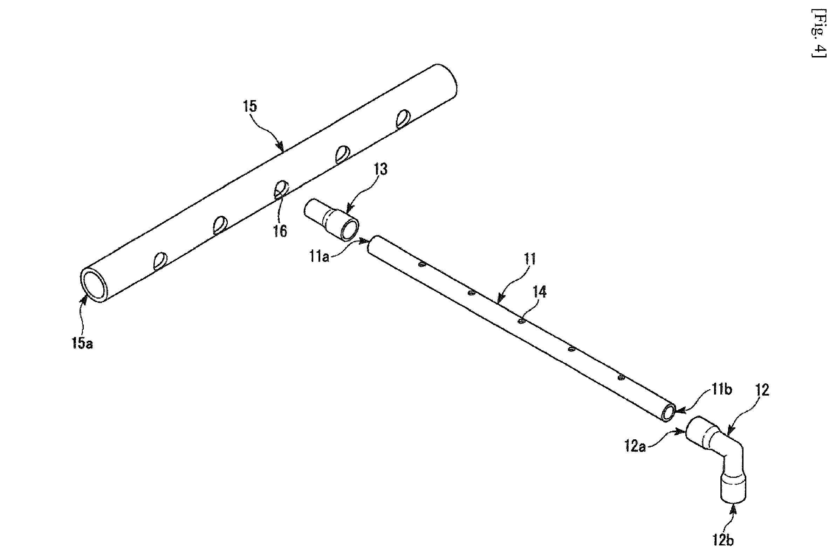

In the aeration device 10 illustrated in Fig. 3, base ends 11a of the aeration pipes 11 are detachably attached to and communicate with the main pipe 15 through the connecting members 13, and one ends 12a of the opening pipes 12 directly communicate with distal ends 11b of the aeration pipes 11 such that the main pipe 15 is perpendicular to the aeration pipes 11 (see Fig. 4).

The main pipe 15 has a base end 15a detachably connected to a gas supply pipe to send gas supplied from a gas supply device to the respective aeration pipes 11.

For example, the main pipe 15 is a circular pipe in which a cross section perpendicular to the longitudinal direction has a circular shape. As illustrated in Fig. 4, a plurality of circular connection holes 16, each of which are used to connect the main pipe 15 to the connecting members 13, are formed in a line along the longitudinal direction of the main pipe 15 in a side portion of a peripheral wall of the main pipe 15 in a state in which the main pipe 15 is laid horizontally.

Examples of the main pipe 15 include a header pipe and the like.

Examples of a material of the main pipe 15 include the synthetic resins, metal and the like given as examples in the above description of the material of the aeration pipe 11.

Fig. 4 is an exploded perspective view illustrating a state in which the connecting members 13 are removed from the main pipe 15, and the connecting members and the opening pipes 12 are removed from the aeration pipes 11.

In one aspect of the aeration device of the invention, a length from the base end corresponding to a connecting portion between the main pipe 15 and the gas supply pipe to a distal end when the aeration device is seen in the vertical direction in plan view in the state in which the main pipe 15 is laid horizontally, that is, a length from the base end 15a to the other end of the main pipe 15 in Fig. 4 is preferably 150 to 2500 mm, and more preferably 200 to 2200 mm. In addition, an internal diameter of the main pipe 15 is preferably 20 to 100 mm, and more preferably 40 to 90 mm from a viewpoint of uniformity of aeration.

The internal diameter of the main pipe 15 refers to a diameter of a portion, through which a liquid or gas actually flows, obtained by subtracting a thickness of the pipe from a diameter of the main pipe 15. In addition, as described above, the cross section perpendicular to the longitudinal direction of the main pipe 15 preferably has a circular shape. Moreover, when the cross section has an oval shape, the internal diameter of the main pipe 15 refers to a longest line among straight lines drawn to pass through a center of the main pipe 15 on the cross section of the main pipe 15. In addition, it is preferable that the main pipe 15 have a shape in which the internal diameter does not change in the longitudinal direction thereof.

As illustrated in Fig. 3, when the aeration device 10 includes the plurality of aeration pipes 11, it is possible to diffuse more gas at a time.

In addition, the main pipe 15 is connected to the aeration pipes 11 by the connecting members 13. Thus, for example, when the aeration device 10 is maintained or when a flow of gas is changed, it is possible to easily remove the aeration pipes 11. Moreover, since the aeration pipes 11 may be easily removed from the main pipe 15, cleaning is easily performed. Further, for example, when the above Inequality (1) is not satisfied due to change of the air flow, the above Inequality (1) may be satisfied by replacing only the aeration pipes 11. Thus, replacement and installation are convenient. Moreover, the main pipe 15 and the aeration pipes 11 may be easily and appropriately replaced according to a size of a membrane module described below.

Furthermore, the opening pipes 12 communicate with the respective aeration pipes 11, and thus resistance may be equalized in each of the aeration pipes 11. Gas has a property of flowing from a high-resistance place to a low-resistance place. However, when resistance in each of the aeration pipes 11 can be equalized, it is possible to more uniformly diffuse gas from the respective aeration holes 14 of each of the aeration pipes 11.

Moreover, since the main pipe 15 is perpendicular to the aeration pipes 11, gas supplied from the gas supply device flows in a horizontal direction when passing through the main pipe 15, and is supplied to the aeration pipes 11 extending in the horizontal direction. Therefore, resistance in the main pipe 15 and the aeration pipes 11 is equalized, and gas is more uniformly supplied to the respective aeration pipes 11.

The aeration device 10 illustrated in Fig. 1 is bent at two places of the connecting member 13 and the opening pipe 12, and thus passage resistance may be reduced.

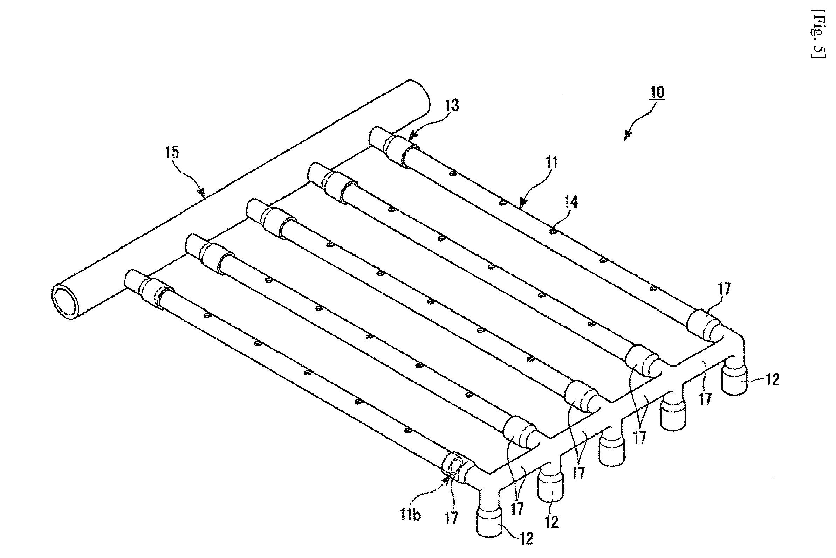

An aeration device including a plurality of aeration pipes is not limited to the aeration device illustrated in Fig. 3. In the aeration device illustrated in Fig. 3, the distal ends 11b of the aeration pipes 11 do not communicate with each other. However, the distal ends 11b of the aeration pipes 11 may communicate with each other. Examples of the aeration device 10 in which the distal ends 11b of the aeration pipes 11 communicate with each other include an aeration device 10 including a main pipe 15, a plurality of aeration pipes 11, communication members 17 allowing distal ends 11b of the aeration pipes 11 to communicate with each other, and a plurality of opening pipes 12 illustrated in Fig. 5.

The aeration device 10 illustrated in Fig. 5 is the same as the aeration device 10 illustrated in Fig. 3 except that the distal ends 11b of the aeration pipes 11 communicate with each other through the communication members 17, the opening pipes 12 extend in the vertical direction without being bent, and one ends of the opening pipes 12 communicate with the communication members 17. In other words, in one embodiment of the aeration device of the invention illustrated in Fig. 5, the opening pipes 12 directly communicate with the communication members 17, and extend in the vertical direction from portions for communicating with the communication members 17.

The communication members 17 are not particularly limited when the communication members 17 may allow the distal ends 11b of the aeration pipes 11 to communicate with each other. Examples of a material of the communication members 17 include the synthetic resins, metal and the like given as examples in the above description of the material of the aeration pipe 11.

The communication members 17 illustrated in Fig. 5 are integrated with the opening pipes 12. However, the communication members 17 may be independent from the opening pipes 12.

As illustrated in Fig. 5, if the distal ends 11b of the aeration pipes 11 communicate with each other through the communication members 17, even when gas in one of the aeration pipes 11 disposed near the gas supply device remains in the aeration pipes 11 without being completely diffused from the aeration holes 14 formed in the aeration pipes 11, gas flows into another one of the aeration pipes 11 through the communication members 17, and thus gas may be more uniformly diffused.

In addition, for example, when the aeration device 10 is maintained or when a flow of gas is changed, the opening pipes 12 may be easily removed from the aeration pipes 11. Furthermore, since the opening pipes 12 are detachable from the aeration pipes 11, cleaning is easily performed, and sizes and the number of the aeration pipes 11 may be easily and appropriately changed according to a size of the membrane module described below.

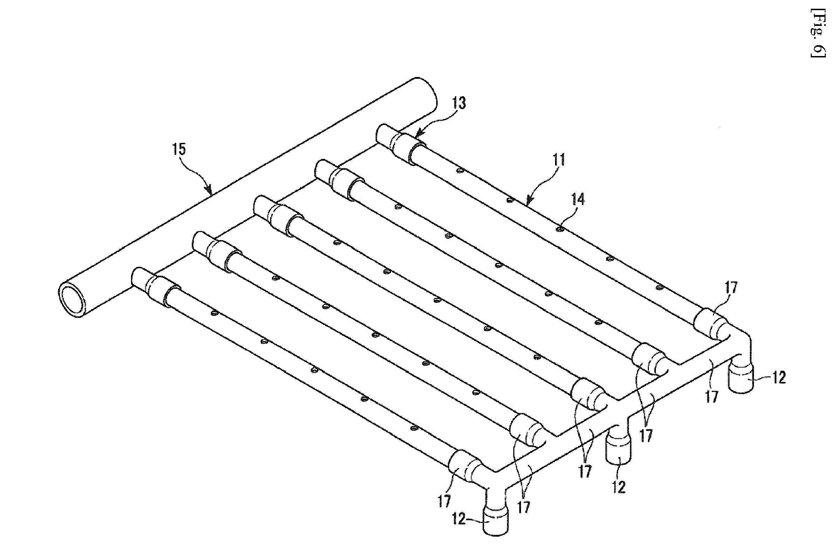

In the aeration device 10 illustrated in Figs. 1, 3, and 5 described above, the aeration pipes 11 are equal in number to the opening pipes 12. In other words, the opening pipes 12 communicate with the respective aeration pipes 11. However, for example, as in the aeration device 10 illustrated in Fig. 6, the aeration pipes 11 may not be equal in number to the opening pipes 12.

In one embodiment of the aeration device of the invention, a ratio of the number A of the aeration pipes to the number B of the opening pipes is preferably 1 to 3.5. When the ratio A/B is less than 1, the number of the opening pipes 12 is greater than the number of the aeration pipes 11. When the number of the opening pipes 12 is the same as the number of the aeration pipes 11, or when the number of the opening pipes 12 is greater than the number of the aeration pipes 11, effect of providing the opening pipes 12 described above is almost the same, and thus the number of the opening pipes 12 needs not to be increased. On the other hand, when the ratio A/B is less than or equal to 3.5, a structure of the aeration device 10 may be more simplified while sufficiently exhibiting the effect of providing the opening pipes 12 described above. In addition, the ratio A/B of the number A of the aeration pipes to the number B of the opening pipes is more preferably 1 to 2.

In the aeration device 10 illustrated in Figs. 1 and 3, the opening pipes 12 directly communicate with the aeration pipes 11. However, in the aeration device 10 illustrated in Figs. 5 and 6, the opening pipes 12 communicate with the aeration pipes 11 through the communication members 17.

In this way, the one ends of the opening pipes 12 may directly or indirectly communicate with the distal ends of the aeration pipes 11.

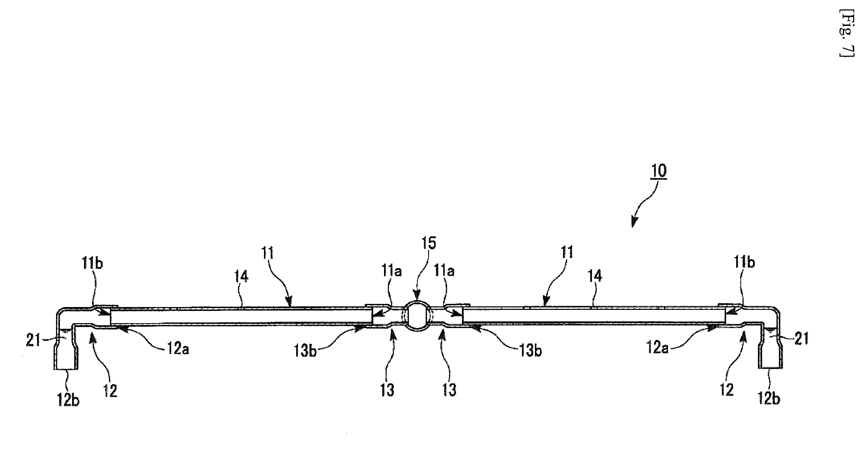

In addition, in the aeration device 10 illustrated in Figs. 3, 5, and 6 described above, the aeration pipes 11 are attached to the main pipe 15 through the connecting members 13 such that the aeration pipes 11 are attached to one side when the main pipe 15 is cut lengthwise through a central axis line of the main pipe 15. However, for example, as illustrated in Fig. 7, the aeration pipes 11 may be attached to the other side. In other words, in an aeration device 10 illustrated in Fig. 7, aeration pipes 11 are attached to both sides of the main pipe 15.

When the aeration pipes 11 are attached to the both sides of the main pipe 15, one aeration pipe or two or more aeration pipes may be attached to the respective sides. In other words, in one embodiment of the aeration device of the invention, the aeration pipes 11 may be symmetrically or asymmetrically disposed with respect to the central axis of the main pipe 15 when the aeration device is seen in the vertical direction in plan view in the state in which the main pipe 15 is laid horizontally.

<Use>

The aeration device is used by being disposed in a water tank of a water treatment apparatus including a membrane module unit (for example, an activated sludge treatment equipment, a membrane washing equipment, a membrane separation device, a waste water treatment equipment, and the like). Specifically, the aeration device is used when water to be treated is aerated or a membrane module is washed.

<Operation method for aeration device>

It is preferable to operate the aeration device to satisfy the above Inequality (1). For example, it is preferable to operate the aeration device while adjusting an air flow of gas supplied per aeration pipe to satisfy the above Inequality (1).

[Water treatment apparatus]

Hereinafter, a description will be given of a water treatment apparatus of the invention in detail with reference to drawings.

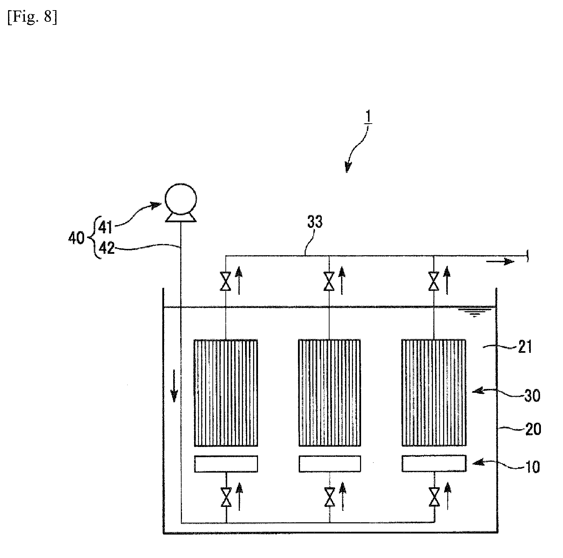

Fig. 8 is a schematic diagram illustrating a configuration of the water treatment apparatus corresponding to one embodiment of the invention. A water treatment apparatus 1 of this example is a water treatment apparatus including a water tank 20 containing water to be treated 21 such as activated sludge, a membrane module unit 30 disposed in the water tank 20, an aeration device 10 of the invention (hereinafter, which may be referred to as an aeration unit) disposed below the membrane module unit 30, and a gas supply device 40 (hereinafter, which may be referred to as a gas supply unit), and used as an immersion type membrane separation device.

In other words, another embodiment of the invention relates to a water treatment apparatus including an aeration unit, which includes an aeration pipe extending in the horizontal direction and including a plurality of aeration holes formed in an upper portion, and an opening pipe, and a gas supply unit including a blower and a gas supply pipe for supplying gas to the aeration pipe, wherein one end of the opening pipe directly or indirectly communicates with a distal end of the aeration pipe, an open end of the opening pipe is open downward in the vertical direction, the aeration unit and the gas supply unit are connected to each other by the gas supply pipe, and the above Inequality (1) is satisfied. In addition, it is preferable that the gas supply unit further include a control unit for controlling a supplied air flow.

A size of the water tank 20 is not particularly limited. However, for example, a water depth is preferably 1 m or more.

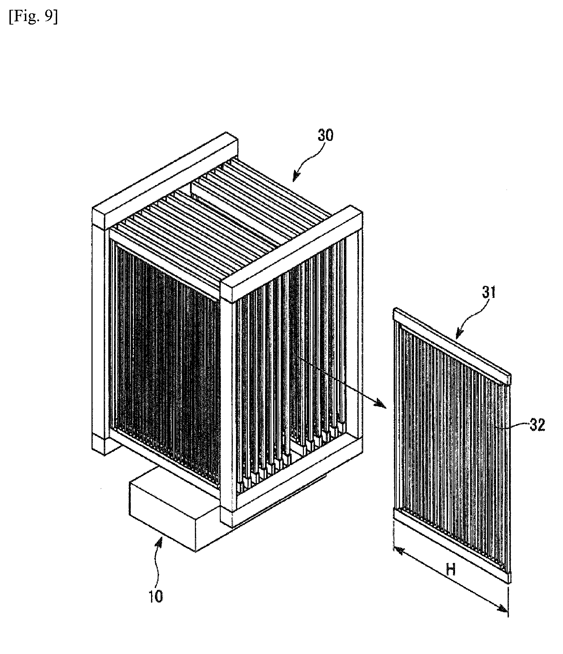

As illustrated in Fig. 9, the membrane module unit 30 includes a plurality of membrane modules 31.

In this example, each of the membrane modules 31 illustrated in Fig. 9 includes membrane elements 32 such as hollow fiber membranes. In addition, as illustrated in Fig. 8, a suction pump is connected to the membrane modules 31 through a suction pipe 33 to enable suction filtration.

The gas supply device 40 illustrated in Fig. 8 includes a blower 41 corresponding to an air supply unit, and a gas supply pipe 42 that connects the blower 41 to the aeration device 10.

The gas supply pipe 42 supplies gas sent from the blower 41 to the aeration device 10, and has one end that communicates with the blower 41.

In Figs. 8 and 9, as a matter of convenience, respective members included in the aeration device 10 such as the aeration pipe and the opening pipe are not illustrated in the aeration device 10. However, when the water treatment apparatus 1 includes the aeration device 10 illustrated in Fig. 1, the other end of the gas supply pipe 42 communicates with the one end 13a of the connecting member 13 of the aeration device 10. In addition, when the water treatment apparatus 1 includes the aeration device 10 illustrated in Figs. 3, 5, 6, and 7, the other end of the gas supply pipe 42 communicates with the base end 15a of the main pipe 15 of the aeration device 10.

In general, air is used as gas supplied to the aeration device. However, gas other than air (for example, oxygen and the like) may be used.

An air flow Q of gas supplied per aeration pipe is preferably 25 to 150 l/min. In addition, the air flow Q is more preferably 50 to 125 l/min. When the air flow Q falls within the above range, it is more effective in uniform aeration.

Further, a flow rate of gas flowing in the aeration pipes 11 is preferably 20 m/s or less. When the flow rate of gas flowing in the aeration pipes 11 is 20 m/s or less, it is possible to suppress an increase in pressure loss in the aeration pipes 11, and thus an increase in aeration energy is prevented. A lower limit of the flow rate of gas flowing in the aeration pipes 11 is not particularly limited. However, as described in the foregoing, as the flow rate increases, gas more easily reaches the distal ends 11b of the aeration pipes 11. As a result, uniformity of gas diffused from the respective aeration holes 14 is enhanced. Therefore, the flow rate is preferably 5 m/s or more.

Furthermore, a flow rate of gas diffused from the aeration holes 14 is preferably 13 m/s or less. When the flow rate of gas diffused from the aeration holes 14 is 13 m/s or less, it is possible to suppress an increase in pressure loss in the aeration pipes 11, and thus an increase in aeration energy is prevented. A lower limit of the flow rate of gas flowing in the aeration pipes 11 is preferably 5 m/s or more. When the flow rate of gas diffused from the aeration holes 14 is 5 m/s or more, it is more effective in uniform aeration.

For example, the aeration device 10 is disposed below the membrane module unit 30 in the water tank 20 having a water depth of 1 m or more.

In terms of uniformly diffusing gas in the membrane module unit 30, it is preferable that the aeration device 10 be disposed below the membrane module unit 30 such that the longitudinal direction of each of the aeration pipes is parallel to a width direction H of each of the membrane modules 31 of the membrane module unit 30 illustrated in Fig. 9.

In other words, in one embodiment of the air diffusion method according to the invention, as illustrated in Fig. 8, first, the membrane module unit 30, the aeration device 10 and the like are disposed in the water tank 20, and the water to be treated 21 is stored at a predetermined water level (water depth). Then, the suction pump is operated in this state to perform suction filtration by the membrane module unit 30.

In addition, in parallel with the suction filtration, gas is continuously supplied from the gas supply device 40 (blower 41) toward the aeration device 10 for a predetermined period of time. It is preferable to control a feed rate of gas to satisfy the above Inequality (1). When gas is supplied in this way, gas supplied to the aeration device 10 through the gas supply pipe 42 spouts out from the aeration holes 14 of each of the aeration pipes 11 by passing through the main pipe 15.

When gas spouts out from the aeration holes 14 in this way, the spouting gas becomes air bubbles and moves upward in the water tank 20, that is, in the liquid to be treated 21. The air bubbles that move upward form a gas-liquid mixing flow by accompanying the liquid to be treated 21. The gas-liquid mixing flow washes each membrane element by hitting the membrane module unit 30 (membrane modules 31). In other words, the gas-liquid mixing flow separates suspended matter such as sludge attached to a surface of the membrane element (membrane module unit 30), and removes the suspended matter from the membrane module unit 30.

After performing the above-described aeration process for a predetermined period of time, a suspension process is performed to stop the blower 41 for a certain period of time to suspend supply of gas to the aeration device 10. Then, gas remaining in the main pipe 15 and the aeration pipes 11 escapes from the aeration holes 14 and discharges into the water to be treated 21, thereby washing the membrane module unit 30. In addition, as a replacement for the gas, the water to be treated 21 flows from the distal ends 12b of the opening pipes 12. For example, the water to be treated 21 that flows in as described above wets dried and accumulated foreign substance (sludge) that clogs the aeration holes 14 and sludge accumulated in the aeration pipes 11. Therefore, when aeration is resumed by operating the blower 41 after the certain period of time, it is possible to easily discharge the foreign substance and the sludge from the aeration holes 14. That is, it is possible to wash an inside of the main pipe 15, an inside of the aeration pipes 11, and the aeration holes 14.

A time required to perform the aeration process varies with types and the amount of sludge and the like attached to the surface of the membrane module unit. In general, the time is preferably 30 minutes to 360 minutes.

<Effects>

The water treatment apparatus 1 of the present embodiment can uniformly diffuse gas, and includes the aeration device 10 of the invention which is conveniently installed. Therefore, the membrane module may be sufficiently washed, and thus it is possible to prevent performance of the membrane module from being degraded due to clocking.

Examples

Hereinafter, the invention will be described in detail by examples. However, the invention is not limited to the examples.

[Example 1]

One aeration pipe extending in a horizontal direction in which an internal diameter D was 20.0 mm, a length L was 500 mm, and five equally spaced circular aeration holes, each of which had a diameter d of 6.0 mm, were formed in an upper portion thereof was used as the aeration pipe.
The other end of a connecting member was allowed to communicate with a base end of the aeration pipe. In addition, one end of an opening pipe, in which the other end was open downward in a vertical direction and the other end side extended downward in the vertical direction and was allowed to directly communicate with a distal end of the aeration pipe, was formed as the aeration device 10 illustrated in Fig. 1. A 90° elbow pipe was used as the opening pipe.
A gas supply pipe of a gas supply device was connected to one end of the connecting member, and air was supplied from the gas supply device to the aeration pipe of the aeration device at an air flow of 100 l/min.
A flow rate of air flowing in the aeration pipe was 5.3 m/s. In addition, an air flow of air diffused from each aeration hole was 20.0 l/min per aeration hole. Further, flow rates of air diffused from the respective aeration holes were 11.3 m/s, 11.6 m/s, 12.0 m/s, 11.9 m/s, and 12.1 m/s in order from a side of the base end of the aeration pipe, and an average flow rate thereof was 11.8 m/s. The flow rates of air diffused from the respective aeration holes were obtained by setting a cross-sectional area of each of the aeration holes to $2.83 \times 10^{-5}$ m$^2$.
Table 2 shows sizes of the aeration pipe and each of the aeration holes, an air flow of air supplied to the aeration pipe of the aeration device from the gas supply device, a result of an evaluation of a characteristic of aeration, and Table 1 shows a value of a sample variance corresponding to an indicator of the evaluation of the characteristic of aeration.

<Evaluation of characteristic of aeration>

The sample variance corresponding to the indicator of the evaluation of the characteristic of aeration was calculated based on the air flows of air diffused from the aeration holes and the flow rates of air diffused from the aeration holes obtained above. The sample variance was calculated using Inequality (2) below. When the sample variance was 2 or less, it was determined that uniform aeration could be performed, and the evaluation was "O". When the sample variance exceeded 2, it was determined that uniform aeration could not be performed, and the evaluation was "×". The results are shown in Table 1. In addition, in Table 1, diamond-shaped dots depict sample variances of Examples, and black circles depict sample variances of Comparative Examples.

$$\text{Sample variance} = \{(V_1 - V)^2 + (V_2 - V)^2 + \cdots + (V_n - V)^2\}/n \cdots (2)$$

In Inequality (2), $V_1$, $V_2$, $\cdots$, and $V_n$ denote flow rates of air diffused from n respective aeration holes formed per aeration pipe, and V denotes an average flow rate of air diffused from the respective aeration holes.

[Example 2]

A characteristic of aeration was evaluated similarly to Example 1 except that the internal diameter D of the aeration pipe was changed to 13.0 mm. Results are shown in Tables 1 and 2.
A flow rate of air flowing in the aeration pipe was 12.6 m/s. In addition, an air flow of air diffused from each aeration hole was 20.0 l/min per aeration hole. Further, flow rates of air diffused from the respective aeration holes were 10.6 m/s, 10.7 m/s, 11.6 m/s, 12.4 m/s, and 13.7 m/s in order from the side of the base end of the aeration pipe, and an average flow rate thereof was 11.8 m/s. The flow rates of air diffused from the respective aeration holes were obtained by setting the cross-sectional area of each of the aeration holes to $2.83 \times 10^{-5}$ m$^2$.

[Example 3]

A characteristic of aeration was evaluated similarly to Example 1 except that the internal diameter D of the aeration pipe was changed to 13.0 mm, and the air flow of air supplied to the aeration pipe of the aeration device from the gas supply device was changed to 75 l/min. Results are shown in Tables 1 and 2.

A flow rate of air flowing in the aeration pipe was 9.4 m/s. In addition, an air flow of air diffused from each aeration hole was 15.0 l/min per aeration hole. Further, flow rates of air diffused from the respective aeration holes were 8.4 m/s, 8.2 m/s, 8.6 m/s, 9.3 m/s, and 9.8 m/s in order from the side of the base end of the aeration pipe, and an average flow rate thereof was 8.9 m/s. The flow rates of air diffused from the respective aeration holes were obtained by setting the cross-sectional area of each of the aeration holes to $2.83 \times 10^{-5}$ $m^2$.

[Example 4]

A characteristic of aeration was evaluated similarly to Example 1 except that the internal diameter D of the aeration pipe was changed to 13.0 mm, and the air flow of air supplied to the aeration pipe of the aeration device from the gas supply device was changed to 60 l/min. Results are shown in Tables 1 and 2.

A flow rate of air flowing in the aeration pipe was 7.5 m/s. In addition, an air flow of air diffused from each aeration hole was 12.0 l/min per aeration hole. Further, flow rates of air diffused from the respective aeration holes were 7.9 m/s, 7.4 m/s, 7.8 m/s, 7.5 m/s, and 4.8 m/s in order from the side of the base end of the aeration pipe, and an average flow rate thereof was 7.1 m/s. The flow rates of air diffused from the respective aeration holes were obtained by setting the cross-sectional area of each of the aeration holes to $2.83 \times 10^{-5}$ $m^2$.

[Example 5]

A characteristic of aeration was evaluated similarly to Example 1 except that the internal diameter D of the aeration pipe was changed to 9.0 mm, and the air flow of air supplied to the aeration pipe of the aeration device from the gas supply device was changed to 75 l/min. Results are shown in Tables 1 and 2.

A flow rate of air flowing in the aeration pipe was 19.6 m/s. In addition, an air flow of air diffused from each aeration hole was 15.0 l/min per aeration hole. Further, flow rates of air diffused from the respective aeration holes were 7.5 m/s, 8.2 m/s, 8.5 m/s, 9.7 m/s, and 10.4 m/s in order from the side of the base end of the aeration pipe, and an average flow rate thereof was 8.9 m/s. The flow rates of air diffused from the respective aeration holes were obtained by setting the cross-sectional area of each of the aeration holes to $2.83 \times 10^{-5}$ $m^2$.

[Example 6]

A characteristic of aeration was evaluated similarly to Example 1 except that the internal diameter D of the aeration pipe was changed to 9.0 mm, and the air flow of air supplied to the aeration pipe of the aeration device from the gas supply device was changed to 60 l/min. Results are shown in Tables 1 and 2.

A flow rate of air flowing in the aeration pipe was 15.7 m/s. In addition, an air flow of air diffused from each aeration hole was 12.0 l/min per aeration hole. Further, flow rates of air diffused from the respective aeration holes were 7.1 m/s, 7.0 m/s, 6.7 m/s, 7.3 m/s, and 7.3 m/s in order from the side of the base end of the aeration pipe, and an average flow rate thereof was 7.1 m/s. The flow rates of air diffused from the respective aeration holes were obtained by setting the cross-sectional area of each of the aeration holes to $2.83 \times 10^{-5}$ $m^2$.

[Example 7]

A characteristic of aeration was evaluated similarly to Example 1 except that the internal diameter D of the aeration pipe was changed to 13.0 mm, the diameter of each of the aeration holes was changed to 4.0 mm, and the air flow of air supplied to the aeration pipe of the aeration device from the gas supply device was changed to 60 l/min. Results are shown in Tables 1 and 2.

A flow rate of air flowing in the aeration pipe was 7.5 m/s. In addition, an air flow of air diffused from each aeration hole was 12.0 l/min per aeration hole. Further, flow rates of air diffused from the respective aeration holes were 15.9 m/s, 16.2 m/s, 16.2 m/s, 15.7 m/s, and 15.6 m/s in order from the side of the base end of the aeration pipe, and an average flow rate thereof was 15.9 m/s. The flow rates of air diffused from the respective aeration holes were obtained by setting the cross-sectional area of each of the aeration holes to $1.26 \times 10^{-5}$ $m^2$.

[Example 8]

A characteristic of aeration was evaluated similarly to Example 1 except that the internal diameter D of the aeration pipe was changed to 7.0 mm, and the air flow of air supplied to the aeration pipe of the aeration device from the gas supply device was changed to 50 l/min. Results are shown in Tables 1 and 2.
A flow rate of air flowing in the aeration pipe was 21.7 m/s. In addition, an air flow of air diffused from each aeration hole was 10.0 l/min per aeration hole. Further, flow rates of air diffused from the respective aeration holes were 6.4 m/s, 5.5 m/s, 6.1 m/s, 5.8 m/s, and 5.6 m/s in order from the side of the base end of the aeration pipe, and an average flow rate thereof was 5.9 m/s. The flow rates of air diffused from the respective aeration holes were obtained by setting the cross-sectional area of each of the aeration holes to $2.83 \times 10^{-5}$ m$^2$.

[Example 9]

A characteristic of aeration was evaluated similarly to Example 1 except that the internal diameter D of the aeration pipe was changed to 7.0 mm, and the air flow of air supplied to the aeration pipe of the aeration device from the gas supply device was changed to 55 l/min. Results are shown in Tables 1 and 2.
A flow rate of air flowing in the aeration pipe was 23.8 m/s. In addition, an air flow of air diffused from each aeration hole was 11.0 l/min per aeration hole. Further, flow rates of air diffused from the respective aeration holes were 6.7 m/s, 6.0 m/s, 6.5 m/s, 6.7 m/s, and 6.5 m/s in order from the side of the base end of the aeration pipe, and an average flow rate thereof was 6.5 m/s. The flow rates of air diffused from the respective aeration holes were obtained by setting the cross-sectional area of each of the aeration holes to $2.83 \times 10^{-5}$ m$^2$.

[Example 10]

A characteristic of aeration was evaluated similarly to Example 1 except that the internal diameter D of the aeration pipe was changed to 7.0 mm, and the air flow of air supplied to the aeration pipe of the aeration device from the gas supply device was changed to 60 l/min. Results are shown in Tables 1 and 2.
A flow rate of air flowing in the aeration pipe was 26.0 m/s. In addition, an air flow of air diffused from each aeration hole was 12.0 l/min per aeration hole. Further, flow rates of air diffused from the respective aeration holes were 7.1 m/s, 6.7 m/s, 6.9 m/s, 7.4 m/s, and 7.3 m/s in order from the side of the base end of the aeration pipe, and an average flow rate thereof was 7.1 m/s. The flow rates of air diffused from the respective aeration holes were obtained by setting the cross-sectional area of each of the aeration holes to $2.83 \times 10^{-5}$ m$^2$.

[Example 11]

A characteristic of aeration was evaluated similarly to Example 1 except that the internal diameter D of the aeration pipe was changed to 13.3 mm, the length of the aeration pipe was changed to 400 mm, the number of aeration holes was changed to 3, and the air flow of air supplied to the aeration pipe of the aeration device from the gas supply device was changed to 55 l/min. Results are shown in Tables 1 and 2.
A flow rate of air flowing in the aeration pipe was 6.6 m/s. In addition, an air flow of air diffused from each aeration hole was 18.3 l/min per aeration hole. Further, flow rates of air diffused from the respective aeration holes were 9.1 m/s, 11.3 m/s, and 12.0 m/s in order from the side of the base end of the aeration pipe, and an average flow rate thereof was 10.8 m/s. The flow rates of air diffused from the respective aeration holes were obtained by setting the cross-sectional area of each of the aeration holes to $2.83 \times 10^{-5}$ m$^2$.

[Example 12]

Two aeration pipes extending in the horizontal direction were used as the aeration pipe. In each aeration pipe, the internal diameter D was 13.3 mm, the length was 350 mm, and three equally spaced circular aeration holes, each of which has the diameter d of 6.0 mm, were formed in the upper portion thereof.
Base ends of the respective aeration pipes were allowed to communicate with the main pipe through connecting members such that the respective aeration pipes were perpendicular to the main pipe and attached to both sides of the main pipe. In addition, one ends of opening pipes, each of which had the other end open downward in the vertical direction and the other end side extending downward in the vertical direction, were allowed to directly communicate with distal ends of the respective aeration pipes, thereby forming the aeration device 10 illustrated in Fig. 7. A 90° elbow pipe was used as each of the opening pipes.
The gas supply pipe of the gas supply device was connected to a base end of the main pipe, and air was supplied to the aeration pipes of the aeration device from the gas supply device at an air flow of 110 l/min in total. In other words, an air flow of air supplied per aeration pipe was 55 l/min.

An average flow rate of air flowing in the two aeration pipes was 13.2 m/s. In addition, an air flow of air diffused from each of the aeration holes was 18.3 l/min per aeration hole. In addition, flow rates of air diffused from the respective aeration holes were 10.8 m/s, 10.9 m/s, and 11.1 m/s in order from a side of a base end of a first aeration pipe, and 9.8 m/s, 10.8 m/s, and 11.6 m/s in order from a side of a base end of a second aeration pipe. An average flow rate thereof was 10.8 m/s. The flow rates of air diffused from the respective aeration holes were obtained by setting the cross-sectional area of each of the aeration holes to $2.83 \times 10^{-5}$ m$^2$. Table 2 shows sizes of each of the aeration pipes and each of the aeration holes, and an air flow of air supplied to each of the aeration pipes of the aeration device from the gas supply device. In addition, Table 1 shows a result of an evaluation of a characteristic of aeration obtained similarly to Example 1.

[Example 13]

A characteristic of aeration was evaluated similarly to Example 1 except that the internal diameter D of the aeration pipe was changed to 13.3 mm, the length of the aeration pipe was changed to 400 mm, the diameter of each of aeration holes d was changed to 5.5 mm, the number of aeration holes was changed to 3, and the air flow of air supplied to the aeration pipe of the aeration device from the gas supply device was changed to 55 l/min. Results are shown in Tables 1 and 2.

A flow rate of air flowing in the aeration pipe was 6.6 m/s. In addition, an air flow of air diffused from each aeration hole was 18.3 l/min per aeration hole. Further, flow rates of air diffused from the respective aeration holes were 12.2 m/s, 12.5 m/s, and 14.0 m/s in order from the side of the base end of the aeration pipe, and an average flow rate thereof was 12.9 m/s. The flow rates of air diffused from the respective aeration holes were obtained by setting the cross-sectional area of each of the aeration holes to $2.38 \times 10^{-5}$ m$^2$.

[Comparative Example 1]

A characteristic of aeration was evaluated similarly to Example 1 except that the internal diameter D of the aeration pipe was changed to 13.3 mm, the number of aeration holes was changed to 3, and the air flow of air supplied to the aeration pipe of the aeration device from the gas supply device was changed to 25 l/min. Results are shown in Tables 1 and 2.

A flow rate of air flowing in the aeration pipe was 6.0 m/s. In addition, an air flow of air diffused from each aeration hole was 8.3 l/min per aeration hole. Further, flow rates of air diffused from the respective aeration holes were 8.5 m/s, 5.7 m/s, and 0.6 m/s in order from the side of the base end of the aeration pipe, and an average flow rate thereof was 4.9 m/s. The flow rates of air diffused from the respective aeration holes were obtained by setting the cross-sectional area of each of the aeration holes to $2.83 \times 10^{-5}$ m$^2$.

[Comparative Example 2]

A characteristic of aeration was evaluated similarly to Example 13 except that the internal diameter D of the aeration pipe was changed to 16.1 mm, the length L of the aeration pipe was changed to 250 mm, and the air flow of air supplied to each of the aeration pipes of the aeration device from the gas supply device was changed to 35 l/min. Results are shown in Tables 1 and 2.

An average flow rate of air flowing in the two aeration pipes was 5.7 m/s. In addition, an air flow of air diffused from each aeration hole was 11.7 l/min per aeration hole. Further, flow rates of air diffused from the respective aeration holes were 9.2 m/s, 7.5 m/s, and 3.9 m/s in order from the side of the base end of the first aeration pipe, and 9.2 m/s, 7.5 m/s, and 3.9 m/s in order from the side of the base end of the second aeration pipe, and an average flow rate thereof was 6.9 m/s. The flow rates of air diffused from the respective aeration holes were obtained by setting the cross-sectional area of each of the aeration holes to $2.83 \times 10^{-5}$ m$^2$.

[Comparative Example 3]

A characteristic of aeration was evaluated similarly to Example 13 except that the internal diameter D of the aeration pipe was changed to 30.0 mm, the length L of the aeration pipe was changed to 250 mm, and the air flow of air supplied to each of the aeration pipes of the aeration device from the gas supply device was changed to 25 l/min. Results are shown in Tables 1 and 2.

An average flow rate of air flowing in the two aeration pipes was 1.2 m/s. In addition, an air flow of air diffused from each aeration hole was 8.3 l/min per aeration hole. Further, flow rates of air diffused from the respective aeration holes were 8.8 m/s, 5.4 m/s, and 0.5 m/s in order from the side of the base end of the first aeration pipe, and 8.8 m/s, 5.4 m/s, and 0.5 m/s in order from the side of the base end of the second aeration pipe, and an average flow rate thereof was 4.9 m/s. The flow rates of air diffused from the respective aeration holes were obtained by setting the cross-sectional area of each of the aeration holes to $2.83 \times 10^{-5}$ m$^2$.

[Comparative Example 4]

A characteristic of aeration was evaluated similarly to Example 1 except that the internal diameter D of the aeration pipe was changed to 25.0 mm, and the air flow of air supplied to the aeration pipe of the aeration device from the gas supply device was changed to 60 l/min. Results are shown in Tables 1 and 2.

A flow rate of air flowing in the aeration pipe was 2.0 m/s. In addition, an air flow of air diffused from each aeration hole was 12.0 l/min per aeration hole. Further, flow rates of air diffused from the respective aeration holes were 9.2 m/s, 8.4 m/s, 7.4 m/s, 5.9 m/s, and 4.2 m/s in order from the side of the base end of the aeration pipe, and an average flow rate thereof was 7.0 m/s. The flow rates of air diffused from the respective aeration holes were obtained by setting the cross-sectional area of each of the aeration holes to $2.83 \times 10^{-5}$ m$^2$.

[Comparative Example 5]

A characteristic of aeration was evaluated similarly to Example 1 except that the number of aeration holes was changed to 6, and the air flow of air supplied to the aeration pipe of the aeration device from the gas supply device was changed to 50 l/min. Results are shown in Tables 1 and 2.

A flow rate of air flowing in the aeration pipe was 2.7 m/s. In addition, an air flow of air diffused from each aeration hole was 8.3 l/min per aeration hole. Further, flow rates of air diffused from the respective aeration holes were 8.9 m/s, 7.4 m/s, 6.3 m/s, 4.2 m/s, 2.1 m/s, and 0.3 m/s in order from the side of the base end of the aeration pipe, and an average flow rate thereof was 4.9 m/s. The flow rates of air diffused from the respective aeration holes were obtained by setting the cross-sectional area of each of the aeration holes to $2.83 \times 10^{-5}$ m$^2$.

[Comparative Example 6]

A characteristic of aeration was evaluated similarly to Example 1 except that the internal diameter D of the aeration pipe was changed to 13.0 mm, the number of aeration holes was changed to 6, and the air flow of air supplied to the aeration pipe of the aeration device from the gas supply device was changed to 50 l/min. Results are shown in Tables 1 and 2.

A flow rate of air flowing in the aeration pipe was 6.3 m/s. In addition, an air flow of air diffused from each aeration hole was 8.3 l/min per aeration hole. Further, flow rates of air diffused from the respective aeration holes were 6.8 m/s, 6.0 m/s, 5.4 m/s, 4.5 m/s, 4.0 m/s, and 1.9 m/s in order from the side of the base end of the aeration pipe, and an average flow rate thereof was 4.8 m/s. The flow rates of air diffused from the respective aeration holes were obtained by setting the cross-sectional area of each of the aeration holes to $2.83 \times 10^{-5}$ m$^2$.

[Table 1]

Evaluation of characteristic of aeration

[Table 2]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Aeration pipe | Internal diameter D (mm) | 20 | 13 | 13 | 13 | 9 | 9 | 13 | 7 | 7 | 7 | 13.3 | 13.3 | 13.3 |
| | Length (mm) | 500 | 500 | 500 | 500 | 500 | 500 | 500 | 500 | 500 | 500 | 400 | 350 | 400 |
| Aeration hole | Diameter d (mm) | 6 | 6 | 6 | 6 | 6 | 6 | 4 | 6 | 6 | 6 | 6 | 6 | 5.5 |
| | Number n | 5 | 5 | 5 | 5 | 5 | 5 | 5 | 5 | 5 | 5 | 3 | 3 | 3 |
| | Space (mm) | 83.3 | 83.3 | 83.3 | 83.3 | 83.3 | 83.3 | 83.3 | 83.3 | 83.3 | 83.3 | 100 | 87.5 | 100 |
| Air flow Q of air (L/min) | | 100 | 100 | 75 | 60 | 75 | 60 | 60 | 50 | 55 | 60 | 55 | 55 | 55 |
| (D × d × n)/Q | | 6.0 | 3.9 | 5.2 | 6.5 | 3.6 | 4.5 | 4.3 | 4.2 | 3.8 | 3.5 | 4.4 | 4.4 | 4.0 |
| D/d | | 3.3 | 2.2 | 2.2 | 2.2 | 1.5 | 1.5 | 3.3 | 1.2 | 1.2 | 1.2 | 2.2 | 2.2 | 2.4 |
| A/B | | 1.0 | 1.0 | 1.0 | 1.0 | 1.0 | 1.0 | 1.0 | 1.0 | 1.0 | 1.0 | 1.0 | 1.0 | 1.0 |
| Sample variance | | 0.08 | 1.16 | 0.36 | 1.33 | 0.78 | 0.05 | 0.06 | 0.11 | 0.14 | 0.14 | 1.53 | 0.55 | 0.62 |
| Evaluation of characteristic of aeration | | ○ | ○ | ○ | ○ | ○ | ○ | ○ | ○ | ○ | ○ | ○ | ○ | ○ |

| | | Comparative Example 1 | Comparative Example 2 | Comparative Example 3 | Comparative Example 4 | Comparative Example 5 | Comparative Example 6 |
|---|---|---|---|---|---|---|---|
| Aeration pipe | Internal diameter D (mm) | 13.3 | 16.1 | 30 | 25 | 20 | 13 |
| | Length (mm) | 500 | 250 | 250 | 500 | 500 | 500 |
| Aeration hole | Diameter d (mm) | 6 | 6 | 6 | 6 | 6 | 6 |
| | Number n | 3 | 3 | 3 | 5 | 6 | 6 |
| | Space (mm) | 125 | 62.5 | 32.5 | 83.3 | 71.4 | 71.4 |
| Air flow Q of air (L/min) | | 25 | 35 | 25 | 60 | 50 | 50 |
| $(D \times d \times n)/Q$ | | 9.6 | 8.3 | 21.6 | 12.5 | 14.4 | 9.4 |
| D/d | | 2.2 | 2.7 | 5 | 4.2 | 3.3 | 2.2 |
| A/B | | 1.0 | 1.0 | 1.0 | 1.0 | 1.0 | 1.0 |
| Sample variance | | 10.7 | 4.89 | 11.61 | 3.20 | 8.95 | 2.49 |
| Evaluation of characteristic of aeration | | × | × | × | × | × | × |

As is clear from Tables 1 and 2, gas could be uniformly diffused from aeration holes in each of the aeration devices of Examples 1 to 13 which satisfies the above Inequality (1) and allows one end of an opening pipe, in which the other end is open downward in the vertical direction and the other end side extends downward in the vertical direction, to communicate with a distal end of an aeration pipe.

On the other hand, gas could not be uniformly diffused from aeration holes in each of the aeration devices of Comparative Examples 1 to 6 which does not satisfy the above Inequality (1)

EXPLANATIONS OF LETTERS OR NUMERALS

1    Water treatment apparatus
10   Aeration device
11   Aeration pipe
11a  Base end
11b  Distal end
12   Opening pipe

| 12a | One end |
|-----|---------|
| 12b | The other end |
| 13 | Connecting member |
| 13a | One end |
| 13b | The other end |
| 14 | Aeration hole |
| 15 | Main pipe |
| 15a | Base end |
| 15b | Distal end |
| 16 | Connection holes |
| 17 | Connection members |
| 20 | Water tank |
| 21 | Water to be treated |
| 30 | Membrane module unit |
| 31 | Membrane module |
| 32 | Membrane elements |
| 33 | Suction pipe |
| 40 | Gas supply device |
| 41 | Blower |
| 42 | Gas supply pipe |

**Claims**

1.  An aeration device comprising:

    an aeration pipe having a plurality of aeration holes formed in an upper portion and extending in a horizontal direction; and
    an opening pipe,
    wherein one end of the opening pipe directly or indirectly communicates with a distal end of the aeration pipe, an open end of the opening pipe is open downward in a vertical direction, and Inequality (1) below is satisfied:

    $$(D \times d \times n)/Q \leq 7.5 \cdots (1)$$

    (In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

2.  The aeration device according to claim 1, wherein a sample variance corresponding to an indicator indicating uniformity of aeration satisfies Inequality (2) below:

    $$\text{Sample variance} = \{(V_1 - V)^2 + (V_2 - V)^2 + \cdots + (V_n - V)^2\}/n \leq 2 \cdots (2)$$

    (In Inequality (2), $V_1$, $V_2$, $\cdots$, and $V_n$ denote flow rates of air diffused from n respective aeration holes formed per aeration pipe, and V denotes an average flow rate of air diffused from the respective aeration holes).

3.  The aeration device according to claim 1 or 2, comprising:

    a main pipe supplied with gas from outside;
    a plurality of the aeration pipes; and
    the opening pipe,
    wherein base ends of the aeration pipes communicate with the main pipe.

4.  The aeration device according to claim 3, comprising:

the main pipe;
the plurality of aeration pipes; and
the opening pipe,
wherein the one end of the opening pipe directly communicates with distal ends of the respective aeration pipes.

**5.** The aeration device according to claim 3, comprising:

the main pipe;
the plurality of aeration pipes;
communication members allowing distal ends of the aeration pipes to communicate with each other; and
one or a plurality of opening pipes having one end communicating with the communication members.

**6.** The aeration device according to claim 5, wherein a ratio (A/B) of the number A of the aeration pipes to the number B of the opening pipes is within a range of 1 to 3.5.

**7.** The aeration device according to any one of claims 1 to 6, wherein a length L of each aeration pipe is within a range of 200 to 500 mm.

**8.** The aeration device according to any one of claims 1 to 7, wherein the internal diameter D of the aeration pipe is within a range of 6 to 20 mm, and the diameter d of each of the aeration holes is within a range of 3 to 10 mm.

**9.** The aeration device according to any one of claims 1 to 8, wherein the number of the aeration holes per aeration pipe is within a range of 3 to 5.

**10.** The aeration device according to any one of claims 1 to 9, wherein the plurality of aeration holes are spaced from each other by 50 to 120 mm.

**11.** A water treatment apparatus comprising:

a water tank;
a membrane module unit disposed in the water tank; and
the aeration device according to any one of claims 1 to 10 disposed below the membrane module unit.

**12.** An operation method for an aeration device including an aeration pipe having a plurality of aeration holes formed in an upper portion and extending in a horizontal direction, and an opening pipe having one end directly or indirectly communicating with a distal end of the aeration pipe and an open end opening downward in a vertical direction and extending in the vertical direction,
wherein an air flow of gas supplied per aeration pipe is adjusted to satisfy Inequality (1) below:

$$(D \times d \times n)/Q \leq 7.5 \cdots (1)$$

(In Inequality (1), D denotes an internal diameter (mm) of the aeration pipe, d denotes a diameter (mm) of each of the aeration holes, n denotes the number of aeration holes per aeration pipe, and Q denotes an air flow (l/min) of gas supplied per aeration pipe).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

**INTERNATIONAL SEARCH REPORT**

| International application No. |
| --- |
| PCT/JP2013/078551 |

A. CLASSIFICATION OF SUBJECT MATTER
*C02F3/20*(2006.01)i, *B01D65/02*(2006.01)i, *B01F3/04*(2006.01)i, *B01F5/06*(2006.01)i, *C02F1/44*(2006.01)i

According to International Patent Classification (IPC) or to both national classification and IPC

B. FIELDS SEARCHED

Minimum documentation searched (classification system followed by classification symbols)
C02F3/20, B01D65/02, B01F3/04, B01F5/06, C02F1/44

Documentation searched other than minimum documentation to the extent that such documents are included in the fields searched
Jitsuyo Shinan Koho      1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2011-092835 A  (Mitsubishi Rayon Co., Ltd.),<br>12 May 2011 (12.05.2011),<br>claims; paragraphs [0034] to [0036]; fig. 1 to 5<br>(Family: none) | 1-5,7-12<br>6 |
| Y<br>A | JP 2000-107791 A  (Mitsubishi Rayon Co., Ltd.),<br>18 April 2000 (18.04.2000),<br>paragraphs [0018] to [0027]; fig. 1<br>& WO 2000/009245 A2      & US 6280626 B1<br>& US 6325938 B1        & US 6328886 B1<br>& EP 1911509 A2        & EP 1911510 A2<br>& CN 1333705 A | 1-5,7-12<br>6 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    14 January, 2014 (14.01.14) | Date of mailing of the international search report<br>    21 January, 2014 (21.01.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

34

**INTERNATIONAL SEARCH REPORT**

International application No.

PCT/JP2013/078551

C (Continuation). DOCUMENTS CONSIDERED TO BE RELEVANT

| Category* | Citation of document, with indication, where appropriate, of the relevant passages | Relevant to claim No. |
|---|---|---|
| Y A | JP 2008-229628 A (Mitsubishi Rayon Co., Ltd.), 02 October 2008 (02.10.2008), paragraphs [0041] to [0056] & US 6511602 B1 & EP 1043276 A1 & WO 1999/029630 A1 & CA 2312735 A | 1-5,7-12 6 |
| Y A | WO 1999/029630 A1 (Mitsubishi Rayon Co., Ltd.), 17 June 1999 (17.06.1999), pages 9 to 12 & JP 2008-229628 A & US 6511602 B1 & EP 1043276 A1 & CA 2312735 A | 1-5,7-12 6 |
| Y A | JP 2010-104932 A (Suido Kiko Kaisha, Ltd., Toray Industries, Inc.), 13 May 2010 (13.05.2010), fig. 1, 6 (Family: none) | 1-5,7-12 6 |
| Y A | JP 09-225272 A (Kubota Corp.), 02 September 1997 (02.09.1997), fig. 6, 7 (Family: none) | 1-5,7-12 6 |
| Y A | JP 2002-307091 A (Kubota Corp.), 22 October 2002 (22.10.2002), fig. 1 (Family: none) | 1-5,7-12 6 |
| Y A | Microfilm of the specification and drawings annexed to the request of Japanese Utility Model Application No. 101381/1976(Laid-open No. 019359/1978) (Nihon Kentetsu Co., Ltd.), 18 February 1978 (18.02.1978), page 2, lines 13 to 14; fig. 2, 3 (Family: none) | 1-5,7-12 6 |
| Y A | JP 08-001185 A (Oshio Kogyo Kabushiki Kaisha), 09 January 1996 (09.01.1996), fig. 1, 2 (Family: none) | 1-5,7-12 6 |
| Y A | JP 49-052345 A (Babcock-Hitachi Kabushiki Kaisha), 21 May 1974 (21.05.1974), fig. 3 to 6 (Family: none) | 1-5,7-12 6 |

Form PCT/ISA/210 (continuation of second sheet) (July 2009)

**INTERNATIONAL SEARCH REPORT**

International application No.

PCT/JP2013/078551

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No. 066597/1984(Laid-open No. 179397/1985)<br>(Kabushiki Kaisha Wakatsuchi),<br>28 November 1985 (28.11.1985),<br>fig. 1, 2<br>(Family: none) | 1-5,7-12<br>6 |
| Y<br>A | Microfilm of the specification and drawings annexed to the request of Japanese Utility Model Application No. 060560/1985(Laid-open No. 178997/1986)<br>(Shin Nippon Koa Kabushiki Kaisha),<br>08 November 1986 (08.11.1986),<br>page 5; fig. 1 to 3<br>(Family: none) | 1-5,7-12<br>6 |
| Y<br>A | JP 2000-517233 A  (SCHEIBINGER, Ludwig),<br>26 December 2000 (26.12.2000),<br>fig. 1 to 15<br>& EP 888254 A          & WO 1997/034839 A1<br>& CZ 9600818 A         & CZ 9603571 A<br>& PL 328918 A          & SK 126298 A<br>& CA 2249397 A | 5,7-11<br>1-4,6,12 |
| A | JP 3322206 B2  (Kurita Water Industries Ltd.),<br>09 September 2002 (09.09.2002),<br>entire text; all drawings<br>(Family: none) | 1-12 |
| A | JP 2006-205119 A  (Nikko Co., Yuasa Membrane Systems Co., Ltd., GS Yuasa Corp.),<br>10 August 2006 (10.08.2006),<br>entire text; all drawings<br>(Family: none) | 1-12 |
| A | JP 2009-142751 A  (Toray Industries, Inc.),<br>02 July 2009 (02.07.2009),<br>entire text; all drawings<br>(Family: none) | 1-12 |
| A | JP 2000-343095 A  (Mitsubishi Rayon Co., Ltd.),<br>12 December 2000 (12.12.2000),<br>entire text; all drawings<br>(Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012235750 A
- JP 2012256145 A
- JP HEI11244674 A
- JP 2010119976 A
- JP 2003144876 A
- US 20090051057 A